# EUROPÄISCHE PATENTANMELDUNG

(11) **EP 1 598 608 A2**
(43) Veröffentlichungstag der Anmeldung: **23.11.2005**
(21) Anmeldenummer: 05010090.8
(22) Anmeldetag: 10.05.2005
(51) Int. Cl.: F24J 2/07

(54) **Kühlungsvorrichtung für strahlungsbeaufschlagte gewölbte Fenster, Strahlungsempfänger und Verfahren zur Kühlung eines gewölbten Fensters**

(30) Priorität: 19.05.2004 DE 102004026517
(71) Anmelder: Deutsches Zentrum für Luft- und Raumfahrt e.V., 53175 Bonn (DE)
(72) Erfinder: Röger, Marc, 74182 Obersulm (DE); Uhlig, Ralf, 70567 Stuttgart (DE)
(74) Vertreter: Hoeger, Stellrecht & Partner Patentanwälte

(57) **Zusammenfassung**

Kühlungsvorrichtung für ein strahlungsbeaufschlagtes glewölbtes Fenster (26), insbesondere eines Strahlungsempfängers (12), welche eine Mehrzahl von Düsen (34) umfaßt, welche in der Nähe eines Fensterfußes (28) um diesen verteilt angeordnet sind und über die das Fenster (26) mit Kühlungsfluid beaufschlagbar ist, und eine Steuereinrichtung (50) zur Aktivierung der Kühlungsfluidbeaufschlagung durch die Düsen (34) umfaßt, welche derart ausgebildet ist, daß die Düsen bezüglich der Kühlungsfluidbeaufschlagung alternierend aktivierbar sind.

## Beschreibung

Die Erfindung betrifft eine Kühlungsvorrichtung für ein strahlungsbeaufschlagtes gewölbtes Fenster, insbesondere eines Strahlungsempfängers.

Die Erfindung betrifft ferner einen Strahlungsempfänger.

Weiterhin betrifft die Erfindung ein Verfahren zur Kühlung eines gewölbten Fensters.

Strahlungsempfänger dienen dazu, solarthermisch erzeugte Wärme an ein Gas weiterzugeben. Bei einem geschlossenen Strahlungsempfänger ist dazu in einem Druckkessel ein Absorber angeordnet, welcher solarthermisch aufgeheizt wird. Die Strahlung tritt dabei durch ein gewölbtes Fenster in den Druckkessel. Dieses Fenster ist einer hohen Wärmebelastung ausgesetzt.

Strahlungsempfänger sind beispielsweise in der DE 197 10 186 A1 und der DE 100 20 322 A1 beschrieben.

Der Erfindung liegt die Aufgabe zugrunde, eine effektiv arbeitende Kühlungsvorrichtung für ein strahlungsbeaufschlagtes gewölbtes Fenster bereitzustellen.

Diese Aufgabe wird erfindungsgemäß dadurch gelöst, daß die Kühlungsvorrichtung eine Mehrzahl von Düsen umfaßt, welche in der Nähe eines Fensterfußes um diesen verteilt angeordnet sind und über die das Fenster mit Kühlungsfluid beaufschlagbar ist, und eine Steuereinrichtung zur Aktivierung der Kühlungsfluidbeaufschlagung durch die Düsen umfaßt, welche derart ausgebildet ist, daß die Düsen bezüglich der Kühlungsfluidbeaufschlagung alternierend aktivierbar sind.

Es läßt sich dann eine homogene Anströmung des Fensters erreichen, um so eine homogene Kühlungswirkung zu erzielen. Durch die alternierende Aktivierung der Düsen läßt sich ein periodisch umlaufender Kühlungsfluidstrom erzeugen, welcher entsprechend das Fenster anströmt. Insbesondere ist dadurch sichergestellt, daß auch ein Scheitelbereich des Fensters effektiv gekühlt wird.

Durch die erfindungsgemäße Lösung läßt sich eine homogene Kühlungswirkung erzielen, wobei eine hohe Kühlleistung bei verringertem Energieverbrauch erreicht wird. Weiterhin läßt sich eine effektive Fensterreinigung bewirken.

Insbesondere wird durch die alternierende Aktivierung das Ausbilden eines Staupunkts verhindert, der entstehen würde, wenn Fluidströme mit entgegengerichteter Strömungsrichtung aufeinandertreffen.

Günstig ist es, wenn die Düsen verteilt um einen Umfang des Fensterfußes angeordnet sind. Dadurch läßt sich - im zeitlichen Mittel - eine homogene Kühlungsfluidbeaufschlagung des Fensters und dadurch eine homogene Kühlungswirkung erreichen.

Insbesondere sind die Düsen verteilt auf einer Kurvenlinie angeordnet, welche koaxial zu einer Fensterfußumfangskurve ist. Dadurch läßt sich eben ein Fensterfußbereich im zeitlichen Mittel gleichmäßig anströmen.

Üblicherweise weist ein gewölbtes Fenster in einem Strahlungsempfänger im Fußbereich einen runden Querschnitt auf. In diesem Fall sind dann die Düsen auf einer Kreislinie angeordnet.

Vorteilhaft ist es, wenn die Düsen gleichmäßig beabstandet sind. Dadurch läßt sich eine gleichmäßige Anströmung mit Kühlungsfluid erzielen und so wiederum eine gleichmäßige Kühlungswirkung bezüglich der gesamten Fensterfläche erreichen.

Insbesondere sind die Düsen so angeordnet, daß eine konkave Seite des Fensters mit Kühlungsfluid beaufschlagbar ist. Die Düsen lassen sich dadurch außerhalb eines Druckkessels anordnen. Dadurch ist auch die Kühlungsfluidzuführung vereinfacht.

Aus dem gleichen Grund ist es günstig, wenn die Düsen so angeordnet sind, daß eine Außenseite des Fensters (bezogen auf einen Innenraum eines Druckkessels) mit Kühlungsfluid beaufschlagbar ist.

Es hat sich als günstig erwiesen, wenn die Düsen so angeordnet sind, daß insbesondere parallel zu einer Fensterachse Kühlungsfluid das Fenster tangential oder näherungsweise tangential anströmt. Wenn die Abweichung von einer tangentialen Anströmung zu groß ist (beispielsweise mehr als 10 Grad beträgt), dann wird ein Fußbereich des Fensters, wie Versuche gezeigt haben, nicht mehr ausreichend gekühlt.

Ganz besonders vorteilhaft ist es, wenn die Düsen um den Fensterfußumfang umlaufend alternierend aktivierbar sind. Dadurch läßt sich ein umlaufender Kühlungsfluidstrom erzeugen, mit dem das Fenster anströmbar ist. Im zeitlichen Mittel läßt sich dadurch das Fenster gleichmäßig mit Kühlungsfluid beaufschlagen um so wiederum eine effektive Kühlung zu erzielen. Insbesondere wird eine homogene Flächenkühlung erreicht.

Aus dem gleichen Grund ist es günstig, wenn durch die Steuereinrichtung die Düsen so aktivierbar sind, daß ein periodischer Umlauf der Anströmung des Fensters um den Fensterfuß erfolgt. Dadurch wird eine gleichmäßige Flächenbeaufschlagung des Fensters mit Kühlungsfluid erzielt, so daß insbesondere auch ein Scheitelbereich kühlbar ist. Ferner wird dadurch die Ausbildung von Staupunkten mit stark reduzierter Kühlungswirkung verhindert.

Es ist sehr vorteilhaft, wenn der Massenstrom des emittierten Kühlungsfluids einstellbar ist. Dadurch kann eine optimale Anpassung an die vorliegenden Betriebsbedingungen erreicht werden. Zur Einstellung des Massenstroms wird beispielsweise eine Gebläseleistung eingestellt.

Günstig ist es auch, wenn die Umlaufperiode einstellbar ist. Die Kühlungsleistung hängt von der absorbierten Wärmemenge ab. Es kann notwendig sein, bei höheren absorbierten Wärmemengen eine kleinere Umlaufperiode zu wählen. Durch die Einstellbarkeit ist eine optimierte Anpassung an die aktuell vorliegenden Verhältnisse möglich.

Insbesondere sind die Düsen durch die Steuereinrichtung so aktiviert, daß ein Anströmbereich des Fensters mit Kühlungsfluid um einen Fensterfußumfang periodisch wandert. Im zeitlichen Mittel läßt sich dadurch eine gleichmäßige Beaufschlagung des Fensters mit Kühlungsfluid erreichen, wobei die Ausbildung von Staupunkten verhindert ist.

Es ist dann auch günstig, wenn über die Steuereinrichtung zu einem bestimmten Zeitpunkt eine Düse oder eine Gruppe von Düsen aktiviert ist und zu einem späteren Zeitpunkt eine benachbarte Düse oder eine Gruppe von Düsen, welche eine benachbarte Düse umfaßt, aktiviert ist. Dadurch läßt sich ein umlaufender Kühlungsfluidstrom erzielen.

Insbesondere erfolgt die Aktivierung benachbarter Düsen periodisch, um so einen umlaufenden Kühlungsfluidstrom zu erzeugen.

Es kann vorgesehen sein, daß jede Düse oder eine Gruppe von Düsen bezüglich der Kühlungsfluidzuführung individuell angesteuert ist. Insbesondere ist dann jeder Düse oder einer Gruppe von Düsen ein steuerbarer Schalter zugeordnet. Beispielsweise kann es sich bei dem steuerbaren Schalter um ein Magnetventil handeln. Über den Schalter läßt sich dann einstellen, ob eine Düse mit Kühlungsfluid versorgt wird oder nicht. Je nach Einstellung wird durch die Düse Kühlungsfluid emittiert oder nicht. Durch entsprechende Ansteuerung der Schalter läßt sich dadurch ein periodisch umlaufender Kühlungsfluidstrom erzeugen.

Es ist auch möglich, daß eine Gruppe von Düsen bezüglich der Aktivierung der Kühlungsfluidbeaufschlagung des Fensters angesteuert ist. Dadurch läßt sich gleichzeitig eine größere Fläche des Fensters mit Kühlungsfluid beaufschlagen.

Bei einer konstruktiv einfachen Ausführungsform ist eine rotierbare Abdeckung für die Düsen vorgesehen, welche mindestens eine Ausnehmung zur Aktivierung mindestens einer Düse umfaßt. Je nach Rotationsstellung der Abdeckung werden eine oder mehrere Düsen zur Kühlungsfluidbeaufschlagung des Fensters freigegeben. Durch die Rotation alterniert diese Freigabe, das heißt die Düsen werden alternierend aktiviert und deaktiviert. Mit der Rotation der Abdeckung, welche beispielsweise als Ringscheibe ausgebildet ist, läßt sich dann wiederum ein periodisch umlaufender Kühlungsfluidstrom erzeugen, das heißt es läßt sich ein periodisch modulierter Massenstrom erzeugen.

Günstig ist es, wenn ein Strömungsverteiler vorgesehen ist, um den Düsen Kühlungsfluid bereitzustellen. Der Strömungsverteiler stellt dann das Kühlungsfluid (beispielsweise Luft) den Düsen bereit.

Beispielsweise sind individuelle Kühlungsfluidführungen zu den Düsen oder zu einer Gruppe von Düsen vorgesehen. Diese Kühlungsfluidführungen sind insbesondere druckbeaufschlagt. Dadurch lassen sich die Düsen bzw. eine Gruppe von Düsen individuell ansteuern, um so wiederum einen periodisch umlaufenden Kühlungsfluidstrom zu erzeugen. Es ist auch möglich, daß ein Düsenring, welcher die Düsen hält, an einem Diffusor sitzt.

Beispielsweise umfaßt der Strömungsverteiler einen Diffusor. Diesem kann ein Gebläse vorgeschaltet sein.

Es kann vorgesehen sein, daß der Strömungsverteiler extern angeordnet ist oder in eine Einrichtung, welche vor oder an dem Fenster angeordnet ist, integriert ist. Beispielsweise kann der Strömungsverteiler in einen Sekundärkonzentrator oder Fensterflansch integriert sein. Im Falle eines externen Strömungsverteilers sind individuelle Zuführungsleitungen vorgesehen. Diese sind im Falle eines integrierten Strömungsverteilers nicht notwendig.

Die erfindungsgemäße Kühlungsvorrichtung läßt sich in einem Strahlungsempfänger einsetzen und insbesondere in diesen integrieren.

Der Erfindung liegt ferner die Aufgabe zugrunde, ein effektives Verfahren zur Kühlung eines gewölbten Fensters mittels eines Kühlungsfluids bereitzustellen.

Diese Aufgabe wird erfindungsgemäß dadurch gelöst, daß das Fenster in einem Fensterfußbereich räumlich alternierend mit Kühlungsfluid angeströmt wird.

Das erfindungsgemäße Verfahren weist die bereits im Zusammenhang mit der erfindungsgemäßen Kühlungsvorrichtung erläuterten Vorteile auf.

Weitere vorteilhafte Ausgestaltungen wurden ebenfalls bereits im Zusammenhang mit der erfindungsgemäßen Kühlungsvorrichtung erläutert.

Insbesondere erfolgt die Kühlungsfluidbeaufschlagung um einen Fensterfuß periodisch umlaufend. Dadurch läßt sich unter der Verhinderung der Ausbildung von Staupunkten eine im zeitlichen Mittel homogene Kühlungsfluidbeaufschlagung des Fensters erreichen.

Aus dem gleichen Grund ist es günstig, wenn das Fenster mit einem räumlich periodisch modulierten Kühlungsfluidstrom beaufschlagt wird.

Insbesondere werden Düsen bezüglich der Kühlungsfluidbeaufschlagung des Fensters periodisch alternierend aktiviert, um so auf energiesparende Weise eine homogene Kühlung des Fensters unter Verhinderung der Ausbildung von Staupunkten zu erhalten.

Die nachfolgende Beschreibung bevorzugter Ausführungsformen dient im Zusammenhang mit der Zeichnung der näheren Erläuterung der Erfindung. Es zeigen:

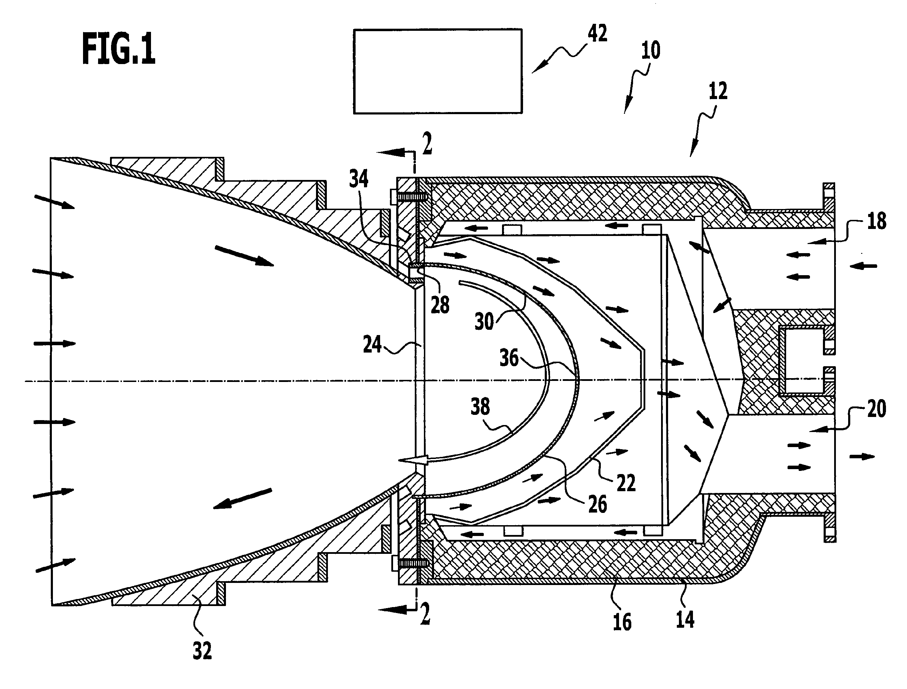

- Figur 1: eine schematische Schnittdarstellung eines Ausführungsbeispiels eines Strahlungsempfängers mit einem Ausführungsbeispiel einer Kühlungsvorrichtung;
- Figur 2: eine Schnittansicht längs der Linie 2-2 gemäß Figur 1 mit einem Strömungsverteiler, und
- Figur 3: eine Schnittansicht der Kühlungsvorrichtung gemäß Figur 2.

Ein Ausführungsbeispiel einer erfindungsgemäßen Kühlungsvorrichtung 10 ist an einem volumetrischen Strahlungsempfänger 12 angeordnet. Der Strahlungsempfänger 12 umfaßt einen Druckkessel 14 mit einer Innenisolierung 16. In dem Druckkessel 14 ist eine erste Strömungsführung 18 zur Zuführung von aufzuheizendem Gas (insbesondere Luft) gebildet. Ferner ist eine zweite Strömungsführung 20 zur Abführung von aufgeheiztem Gas (insbesondere Luft) gebildet.

In dem Druckkessel 14 ist ein Absorber 22 angeordnet, und zwar derart, daß aufzuheizendes Gas aus der ersten Strömungsführung 18 auf den Absorber 22 zur Wärmeaufnahme zugeführt ist. Im Bereich des Absorbers 22 ist die erste Strömungsführung 18 so ausgebildet, daß der Absorber 22 flächig mit aufzuheizendem Gas beaufschlagbar ist.

Gas, welches den Absorber 22 durchströmt hat, wird dann über die zweite Strömungsführung 20 abgeführt.

In dem Druckkessel 14 ist eine Öffnung 24 gebildet, an welcher ein Fenster 26 angeordnet ist. Das Fenster ist gewölbt und insbesondere kuppelförmig ausgebildet mit einem Fußbereich (Fensterfuß) 28 und einem Scheitelbereich 30. Durch das Fenster 26, welches beispielsweise aus Quarzglas hergestellt ist, kann (konzentrierte) Strahlung in den Druckkessel 14 eintreten und den Absorber 22 aufheizen, um so wiederum ein Gas wie Luft aufheizen zu können. Der Absorber 22 ist dazu in dem Druckkessel 14 um das Fenster 26 angeordnet.

In der DE 100 20 322 A1 ist ein Strahlungsempfänger beschrieben, bei dem das Fenster 26 mittels einer Lagervorrichtung an einer Druckkesselwand derart beweglich gelagert ist, daß mechanische Spannungen im Fenster 26 durch Bewegung des Fensters 26 relativ zu der Druckkesselwand abbaubar sind. Auf dieses Dokument wird ausdrücklich Bezug genommen.

In der DE 197 10 986 A1 ist ein Druckkessel 14 offenbart, bei welchem die erste Strömungsführung 18 (Einlaßstromführung) und die zweite Strömungsführung 20 (Auslaßstromführung) derart miteinander gekoppelt sind, daß ein Teilstrom aus der Auslaßstromführung in die Einlaßstromführung rückführbar ist. Dazu sind entsprechende Durchlaßmittel vorgesehen. Auf dieses Dokument wird ebenfalls ausdrücklich Bezug genommen.

Vor dem Druckkessel 14 ist ein Sekundärkonzentrator 32 für Strahlung und insbesondere Solarstrahlung angeordnet. Über den Sekundärkonzentrator 32 läßt sich in einem Primärkonzentrator konzentrierte Solarstrahlung auf die Öffnung 24 konzentrieren und damit auf den Absorber 22 konzentrieren. Der Primärkonzentrator ist beispielsweise durch einen oder mehrere Heliostate gebildet.

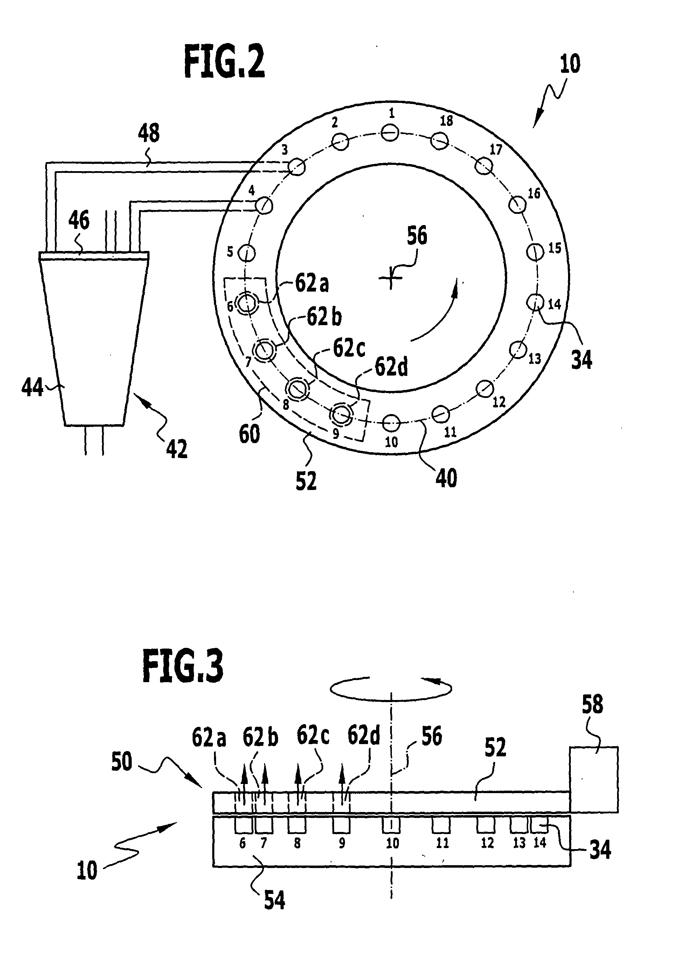

An dem Druckkessel 14 sitzen im Fußbereich 28 des Fensters 26 eine Mehrzahl von Düsen 34 (Figuren 2 und 3), durch die das Fenster 26 an einer der Öffnung 24 zugewandten Außenseite 36 mit Kühlungsfluid und insbesondere Luft beaufschlagbar ist. Die Düsen 34 sind dabei so angeordnet, daß näherungsweise axial austretendes Kühlungsfluid als Freistrahl die Außenseite 36 des Fensters 26 im Fußbereich 28 zumindest näherungsweise tangential anströmt.

Die axiale Richtung ist eine Richtung parallel zur Fensterachse. Es bildet sich dann ein Kühlungsfluidstrom 38 aus, welcher an der Außenseite 36 des Fensters 26 strömt und dieses kühlt. Darüber hinaus sorgt der entsprechende Kühlungsfluidstrom 38 auch für eine Reinigung des Fensters.

Die Düsen 34 sind verteilt um einen Umfang des Fußbereichs 28 des Fensters 26 angeordnet, so daß der gesamte Fußbereich 28 des Fensters 26 mit Kühlungsfluid beaufschlagbar ist. Insbesondere sind die Düsen 34 gleichmäßig beabstandet angeordnet.

Es ist vorgesehen, daß die Düsen 34 auf einer Kurvenlinie 40 angeordnet sind, wobei die Kurvenlinie 40 die gleiche Form hat wie die Umfangslinie und insbesondere koaxial zu der Umfangslinie des Fußbereichs 28 des Fensters 26 ist. Üblicherweise wird die Umfangslinie des Fensters 26 ein Kreis sein, so daß auch die Kurvenlinie 40 eine Kreislinie ist (mit einem kleineren Radius als die Umfangslinie des Fensters 26).

Bei dem in Figur 2 gezeigten Ausführungsbeispiel sind achtzehn Düsen 34 vorgesehen. Es können auch eine größere Anzahl oder eine kleinere Anzahl von Düsen 34 vorgesehen sein.

Die Düsen 34 sind stationär an dem Druckkessel 14 oder einem Fensterflansch angeordnet, das heißt sie sind bezüglich des Druckkessels 14 fest positioniert.

Zur Zuführung von Kühlungsfluid zu den Düsen 34 ist ein Strömungsverteiler 42 vorgesehen. Bei dem in Figur 2 gezeigten Ausführungsbeispiel umfaßt der Strömungsverteiler 42 einen Diffusor 44, welcher extern bezüglich des Druckkessels 14 angeordnet ist. Der Diffusor 44 weist eine Verteilerplatte 46 auf, von der jeweilige Kühlungsfluid-Zuführungsleitungen oder -Schläuche 48 zu den jeweiligen Düsen 34 geführt sind. Bei dem gezeigten Ausführungsbeispiel mit achtzehn Düsen sind achtzehn Leitungen 48 vorgesehen. Dem Diffusor ist ein Gebläse vorgeschaltet, wobei vorzugsweise die Gebläseleistung einstellbar ist.

Es ist grundsätzlich auch möglich, daß der Strömungsverteiler 42 in eine Einrichtung integriert ist, welche vor dem Druckkessel 14 angeordnet ist. Beispielsweise ist der Strömungsverteiler 42 in den Sekundärkonzentrator 32 außerhalb dessen Konzentratorflächen oder in einen Fensterflansch integriert.

Erfindungsgemäß ist es vorgesehen, daß eine periodische, um den Umfang des Fußbereichs 28 des Fensters 26 umlaufende Freistrahl-Anströmung der konvexen Außenseite 36 des Fensters 26 erfolgt. Zur Steuerung dieser Anströmung ist eine Steuereinrichtung 50 vorgesehen.

Dadurch, daß eine periodisch umlaufende (räumlich periodisch modulierte) Anströmung durch die Steuereinrichtung 50 eingestellt wird, wird verhindert, daß sich ein Strömungsstaupunkt insbesondere im Scheitelbereich 30 des Fensters 26 mit reduzierter Kühlungsleistung ausbilden kann. Dadurch wird eine homogenere Kühlung des Fensters 26 erreicht, das heißt die Kühlungswirkung wird verbessert.

Zur Strömungsbeaufschlagung des Fensters 26 werden die Düsen 34 periodisch alternierend bezüglich der Kühlungsfluidbeaufschlagung der Außenseite 36 des Fensters 26 aktiviert. Die Aktivierung wird über die Steuereinrichtung 50 gesteuert.

Bei dem in den Figuren 2 und 3 gezeigten Ausführungsbeispiel umfaßt die Steuerungseinrichtung 50 eine rotierend angetriebene Ringscheibe 52, welche oberhalb eines die Düsen 34 tragenden Düsenrings 54 angeordnet ist. Der Düsenring 54 sitzt fest an dem Druckkessel 14. Die Ringscheibe 52 ist um eine Achse 56 relativ zu dem Düsenring 54 drehbar. Zum Antreiben der Rotationsbewegung ist ein Antrieb 58 vorgesehen, welcher außerhalb der Öffnung 24 im Druckkessel 14 sitzt. Beispielsweise ist die Ringscheibe 52 an ihrer Außenseite mit Zahnrädern versehen, in die entsprechende Zahnräder des Motors 58 eingreifen können.

Die Ringscheibe 52 umfaßt mindestens eine Ausnehmung 60, durch welche bestimmte Düsen freigebbar sind, das heißt aktivierbar sind, so daß über die freigegebenen Düsen Kühlungsfluid die Außenseite 36 des Fensters 26 anströmen kann. Außerhalb der Ausnehmung 60 bzw. der Ausnehmungen 60 deckt die Ringscheibe 52 die entsprechenden Düsen 34 ab, so daß diese nicht aktiviert sind. Bei dem in den Figuren 2 und 3 gezeigten Beispiel eine Momentanstellung der Ringscheibe deckt die Ringscheibe 52 die Düsen eins bis fünf und zehn bis achtzehn ab, so daß diese nicht aktiviert sind, das heißt über diese Düsen keine Kühlmittelbeaufschlagung des Fensters 26 erfolgt.

Bei dem gezeigten Ausführungsbeispiel umfaßt die Ringscheibe 52 vier Ausnehmungen 62a, 62b, 62c und 62d beispielsweise in der Form von Bohrungen. Dadurch sind gleichzeitig vier Düsen aktivierbar. Bei der gezeigten Momentanstellung sind bei der entsprechenden Stellung der Ringscheibe 52 die Düsen sechs, sieben, acht und neun aktiviert, so daß der Bereich des Fensters 26, welcher in der Nähe der Düsen sechs, sieben, acht und neun liegt, mit Kühlungsfluid beaufschlagt wird.

Die Ringscheibe 52 dreht sich mit einer bestimmten Drehzahl. Wenn beispielsweise ausgehend von der Stellung gemäß den Figuren 2 und 3 die Ringscheibe im Gegenuhrzeigersinn sich weiterdreht, dann wird die Düse sechs deaktiviert und die Düse zehn aktiviert. Gleichzeitig ist also immer eine Gruppe von vier Düsen aktiviert. Bei der Weiterdrehung wird eine in Drehrichtung benachbarte Düse aktiviert, während eine in Gegendrehrichtung benachbarte Düse deaktiviert wird.

Durch die Rotation der Ringscheibe 52 erfolgt also eine periodisch alternierende Anströmung des Fensters 26 an seiner Außenseite 36 mit Kühlungsfluid. Es wird ein räumlich periodisch modulierter Kühlungsfluidstrom erzeugt, welcher bezüglich seines Austritts an den Düsen 34 auf der Kurvenlinie 40 wandert.

Der mit Kühlungsfluid beaufschlagte Bereich des Fensters 26 rotiert gewissermaßen längs der Umfangslinie des Fußbereichs 28.

Bei dem in Figur 2 gezeigten Ausführungsbeispiel erfolgt diese periodische Modulation dadurch, daß periodisch Düsen 34 alternierend aktiviert und deaktiviert werden.

Durch die erfindungsgemäße Lösung läßt sich eine hohe Kühlleistung bei erniedrigtem Energieverbrauch erzielen. Die Kühlwirkung bezüglich der Gesamtfläche des Fensters 26 wird homogenisiert. Insbesondere läßt sich auch eine gute Kühlung des Scheitelbereichs 30 sicherstellen.

Es ist grundsätzlich auch möglich, daß die einzelnen Düsen 34 bezüglich der Kühlungsfluidzuführung individuell angesteuert sind, um die Düsen zu aktivieren bzw. zu deaktivieren. Es kann dazu jeder Düse 34 oder einer Gruppe von Düsen 34 ein Schalter zugeordnet sein, über den schaltbar ist, ob eine Düse mit Kühlungsfluid versorgt wird oder nicht. Durch entsprechende Steuerung der Schalter läßt sich ein periodisch modulierter Kühlungsfluidstrom erreichen.

Die Periode der Kühlungsfluidanströmung des Fensters 26, welche beispielsweise durch die Rotationsperiode der Ringscheibe 52 eingestellt wird, wird in Abhängigkeit von der absorbierten Wärmemenge gewählt und der tolerierbaren zeitlichen Temperaturschwankungen an der Fensteroberfläche. Beispielsweise kann es notwendig sein, bei höheren Strahlungsleistungen eine kürzere Umlaufdauer (größere Rotationsfrequenz) einzustellen. Ein typischer Wert für die Umlauffrequenz liegt bei 0,05 Hz.

Die Kühlwirkung kann erhöht werden, indem den Düsen ein größerer Massenstrom zugeführt wird. Bei einem einstellbaren Gebläse ist dieser Massenstrom einstellbar und damit auch der emitttierte Kühlungsfluidstrom einstellbar.

Durch eine Vergrößerung der Düsenöffnungsquerschnittsfläche läßt sich ebenfalls eine verbesserte Kühlwirkung erzielen.

## Patentansprüche

1. Kühlungsvorrichtung für ein strahlungsbeaufschlagtes gewölbtes Fenster (26), insbesondere eines Strahlungsempfängers (12), umfassend eine Mehrzahl von Düsen (34), welche in der Nähe eines Fensterfußes (28) um diesen verteilt angeordnet sind und über die das Fenster (26) mit Kühlungsfluid beaufschlagbar ist, und eine Steuereinrichtung (50) zur Aktivierung der Kühlungsfluidbeaufschlagung durch die Düsen (34), welche derart ausgebildet ist, daß die Düsen bezüglich der Kühlungsfluidbeaufschlagung alternierend aktivierbar sind.

2. Kühlungsvorrichtung nach Anspruch 1, **dadurch gekennzeichnet, daß** die Düsen (34) verteilt um einen Umfang des Fensterfußes (28) angeordnet sind.

3. Kühlungsvorrichtung nach Anspruch 1 oder 2, **dadurch gekennzeichnet, daß** die Düsen (34) verteilt auf einer Kurvenlinie (40) angeordnet sind, welche koaxial zu einer Fensterfußumfangskurve ist.

4. Kühlungsvorrichtung nach einem der vorangehenden Ansprüche, **dadurch gekennzeichnet, daß** die Düsen (34) auf eine Kreislinie (40) angeordnet sind.

5. Kühlungsvorrichtung nach einem der vorangehenden Ansprüche, **dadurch gekennzeichnet, daß** die Düsen (34) gleichmäßig beabstandet sind.

6. Kühlungsvorrichtung nach einem der vorangehenden Ansprüche, **dadurch gekennzeichnet, daß** die Düsen (34) so angeordnet sind, daß eine konkave Seite (36) des Fensters (26) kühlungsfluidbeaufschlagbar ist.

7. Kühlungsvorrichtung nach einem der vorangehenden Ansprüche, **dadurch gekennzeichnet, daß** die Düsen (34) so angeordnet sind, daß eine Außenseite (36) des Fensters (26) mit Kühlungsfluid beaufschlagbar ist.

8. Kühlungsvorrichtung nach einem der vorangehenden Ansprüche, **dadurch gekennzeichnet, daß** die Düsen (34) so angeordnet sind, daß Kühlungsfluid das Fensters (26) tangential oder näherungsweise tangential anströmt.

9. Kühlungsvorrichtung nach einem der vorangehenden Ansprüche, **dadurch gekennzeichnet, daß** die Düsen (34) um den Fensterfußumfang umlaufend alternierend aktivierbar sind.

10. Kühlungsvorrichtung nach einem der vorangehenden Ansprüche, **dadurch gekennzeichnet, daß** durch die Steuereinrichtung (50) die Düsen (34) so aktivierbar sind, daß ein periodischer Umlauf der Anströmung des Fensters (26) um den Fensterfuß (28) erfolgt.

11. Kühlungsvorrichtung nach Anspruch 10, **dadurch gekennzeichnet, daß** die Umlaufperiode einstellbar ist.

12. Kühlungsvorrichtung nach einem der vorangehenden Ansprüche, **dadurch gekennzeichnet, daß** der Massenstrom des emittierten Kühlungsfluids einstellbar ist.

13. Kühlungsvorrichtung nach einem der vorangehenden Ansprüche, **dadurch gekennzeichnet, daß** die Düsen (34) durch die Steuereinrichtung (50) so aktiviert sind, daß ein Anströmungsbereich des Fensters (26) mit Kühlungsfluid um einen Fensterfußumfang periodisch wandert.

14. Kühlungsvorrichtung nach einem der vorangehenden Ansprüche, **dadurch gekennzeichnet, daß** über die Steuereinrichtung (50) zu einem bestimmten Zeitpunkt eine Düse (34) oder eine Gruppe von Düsen (34) aktiviert ist und zu einem späteren Zeitpunkt eine benachbarte Düse oder eine Gruppe von Düsen, welche eine benachbarte Düse umfaßt, aktiviert ist.

15. Kühlungsvorrichtung nach Anspruch 14, **dadurch gekennzeichnet, daß** die Aktivierung benachbarter Düsen (34) periodisch erfolgt.

16. Kühlungsvorrichtung nach einem der vorangehenden Ansprüche, **dadurch gekennzeichnet, daß** jede Düse (34) oder eine Gruppe von Düsen (34) bezüglich der Kühlungsfluidzuführung individuell angesteuert ist.

17. Kühlungsvorrichtung nach Anspruch 16, **dadurch gekennzeichnet, daß** jeder Düse oder einer Gruppe von Düsen ein steuerbarer Schalter zugeordnet ist.

18. Kühlungsvorrichtung nach einem der vorangehenden Ansprüche, **dadurch gekennzeichnet, daß** eine Gruppe von Düsen (34) bezüglich der Aktivierung der Kühlungsfluidbeaufschlagung des Fensters (26) angesteuert ist.

19. Kühlungsvorrichtung nach einem der vorangehenden Ansprüche, **dadurch gekennzeichnet, daß** eine rotierbare Abdeckung (52) für die Düsen (34) vorgesehen ist, welche mindestens eine Ausnehmung (60) zur Aktivierung von mindestens einer Düse (34) umfaßt.

20. Kühlungsvorrichtung nach einem der vorangehenden Ansprüche, **dadurch gekennzeichnet, daß** ein Strömungsverteiler (42) vorgesehen ist, um den Düsen (34) Kühlungsfluid bereitzustellen.

21. Kühlungsvorrichtung nach Anspruch 20, **dadurch gekennzeichnet, daß** individuelle Kühlungsfluidführungen (48) zu den Düsen (34) oder zu einer Gruppe von Düsen (34) führen.

22. Kühlungsvorrichtung nach Anspruch 20 oder 21, **dadurch gekennzeichnet, daß** der Strömungsverteiler (42) einen Diffusor (44) umfaßt.

23. Kühlungsvorrichtung nach einem der Ansprüche 20 bis 22, **dadurch gekennzeichnet, daß** der Strömungsverteiler (42) extern angeordnet ist.

24. Kühlungsvorrichtung nach einem der Ansprüche 20 bis 22, **dadurch gekennzeichnet, daß** der Strömungsverteiler in eine Einrichtung (32), welche vor oder an dem Fenster (26) angeordnet ist, integriert ist.

25. Strahlungsempfänger, welcher eine Kühlvorrichtung gemäß einem der vorangehenden Ansprüche umfaßt.

26. Verfahren zur Kühlung eines gewölbten Fensters mittels eines Kühlungsfluids, bei dem das Fenster in einem Fußbereich räumlich alternierend mit Kühlungsfluid angeströmt wird.

27. Verfahren nach Anspruch 26, **dadurch gekennzeichnet, daß** die Kühlungsfluidbeaufschlagung um einen Fensterfuß periodisch umlaufend erfolgt.

28. Verfahren nach Anspruch 26 oder 27, **dadurch gekennzeichnet, daß** das Fenster mit einem räumlich periodisch modulierten Kühlungsfluidstrom beaufschlagt wird.

29. Verfahren nach einem der Ansprüche 26 bis 28, **dadurch gekennzeichnet, daß** Düsen an einem Fensterfuß bezüglich der Kühlungsfluidbeaufschlagung des Fensters periodisch alternierend aktiviert werden.
